# EUROPEAN PATENT SPECIFICATION

(11) **EP 3 825 171 B1**
(45) Date of publication and mention of the grant of the patent: **16.11.2022**
(21) Application number: 19837244.3
(22) Date of filing: 14.07.2019
(51) Int. Cl.: B60N 2/28

(54) **ISOFIX TWO-LOCK MECHANISM FOR RETAINING**
ISOFIX-DOPPELVERRIEGELUNGSMECHANISMUS ZUR RÜCKHALTUNG
MÉCANISME À DEUX VERROUS ISOFIX POUR RÉTENTION

(30) Priority: 17.07.2018 CN 201821132895 U
(43) Date of publication of application: 26.05.2021
(73) Proprietor: Ningbo Baby First Baby Products Co., Ltd., Yuyao, Zhejiang 315412 (CN)
(72) Inventor: CAO, Wenyong, Yuyao, Zhejiang 315412 (CN)
(74) Representative: Ipside
(86) International application number: PCT/CN2019/095916
(87) International publication number: WO 2020/015596

(56) References cited:
- EP-A1- 3 190 001
- EP-A2- 2 551 150
- CN-U- 205 010 038
- CN-U- 205 010 038
- CN-U- 206 436 869
- CN-U- 207 190 849
- CN-U- 207 190 850
- CN-U- 207 257 443
- CN-U- 207 257 443
- CN-U- 208 576 461
- DE-U1-202008 005 361

## Description

### Technical Field

The present invention relates to a child safety seat part, in particular to an ISOFIX two-lock mechanism for retaining.

### Background Art

Child safety seats are seats installed in cars and used for improving the riding safety of children. When the cars collide or are suddenly slowed down, the child safety seats can reduce the impact on the children and limit the movement of the children so as to reduce injury to the children and ensure the riding safety of the children.

The Chinese patent, Publication No. CN 207257443 U, discloses a safety seat with an ISOFIX retaining structure. The safety seat sequentially comprises a seat, a base and an ISOFIX connector from top to bottom. The seat is separately connected to the base, and the ISOFIX connector is slidably connected to a bottom surface of the base. A front end of the ISOFIX connector is a connecting end connected to a car interface, and a side wall of a rear end of the ISOFIX connector is provided with a vertically oriented rail. The guide rail is provided with a stopping rod movable along the guide rail therein, and the stopping rod is held at an upper end of the guide rail by an elastic member. The stopping rod is connected to a pull belt, and a pull belt pressing rod is arranged in the middle of the ISOFIX connector and is located below the guide rail. The pull belt passes below the pull belt pressing rod, such that when the pull belt is pulled to drive the stopping rod to move, the stopping rod moves downward along the guide rail under an downward inclining action force from the pull belt.

The safety seat further comprises a retaining component located below the bottom surface of the base, and the retaining component comprises a retaining rotary block and a retaining rod. A middle portion of the retaining rotary block is rotatably arranged on the bottom surface of the base via a rotating shaft, one end of the retaining rotary block is a seat end, and the other end of the retaining rotary block forms a mounting groove. The bottom surface of the base is provided with a through hole, and the seat end of the retaining rotary block is just engaged into the through hole. A U-shaped retaining rod is mounted in the mounting groove. A middle portion of the retaining rod is located in the mounting groove, and two ends of the retaining rod extend downward to form connector ends. An elastic element is arranged between an upper surface of the retaining rotary block and the bottom surface of the base. The elastic element is located between the mounting groove and the rotating shaft.

In an initial state, the ISOFIX connector is located below the base, and the stopping rod abuts against the rear of the connector end. With a force applied to the pull belt, the stopping rod moves downward along the guide rail under the downward inclining action force from the pull belt, and when the stopping rod moves to be separated from the connector end, the ISOFIX connector can be pulled out from below the base. At this time, the application of the force to the pull belt is stopped, the stopping rod returns to the upper end of the guide rail under the action of the elastic member, and the stopping rod is located in front of the connector end. The connector end limits the retraction of the ISOFIX connector by inhibiting the return of the stopping rod to the rear of the connecting end, thereby facilitating connecting the connecting end of the ISOFIX connector to the car interface.

Based on this, the inventors desire to provide another ISOFIX retaining mechanism for preventing the retraction of an ISOFIX connector.

### Summary of the Invention

The present invention aims to provide an ISOFIX two-lock mechanism for retaining. When a child safety seat is installed, the ISOFIX two-lock mechanism for retaining can prevent an ISOFIX assembly from retracting after the assembly is pulled out such that the ISOFIX assembly can be smoothly connected to an car interface.

The above technical object of the present invention is achieved by means of the following technical solution:
an ISOFIX two-lock mechanism for retaining comprising a base and an ISOFIX assembly, wherein a bracket is provided at the upper end of the base, the bracket is provided with a channel running through the bracket, the channel is provided with a stopper movable up and down along the channel therein, a stopper bevel is provided at the lower end of the stopper, and a stopper return spring is connected between the stopper and the bracket;
the ISOFIX assembly is slidably fixed to the base;
the ISOFIX assembly comprises a limiting rod located between the base and the bracket; and
when the limiting rod moves into abutment against the stopper bevel, the stopper moves upward along the channel, and the stopper return spring elastically deforms; and when the limiting rod moves further and away from the abutment against the stopper, the stopper moves downward under the action of the stopper return spring until a plane of the stopper abuts against the limiting rod.

By employing the above technical solution, when the ISOFIX assembly moves between the base and the bracket, the limiting rod also moves between the base and the bracket. During pulling out the ISOFIX assembly, the limiting rod moves into abutment against the stopper bevel towards the stopper, at this point, with the further movement of the limiting rod, the stopper moves upward under the action of the limiting rod, and the stopper return spring comes into an extended state. When the limiting rod moves to be separated from the stopper bevel, the stopper will move downward under the actions of the gravity of the limiting rod and the stopper return spring, such that the limiting rod can abut against a plane of the stopper and may not retract due to the limitation from the stopper.

The present invention is further provided that the stopper is provided with a slot, a sliding block is arranged in the slot, the sliding block comprises a driving portion and a sliding block connecting portion which are integrally connected, an upper end of the driving portion is provided with a sliding block bevel, and the sliding block connecting portion is connected to a driving part configured to drive the sliding block to move in the slot.

By employing the above technical solution, the driving part is used for driving the sliding block connecting portion to move in the slot, and the driving portion is driven to move in the slot. During the movement of the driving portion, the sliding block bevel abuts against a wall of the slot of the stopper, such that the stopper is driven to move upward, the limiting rod is out of abutment against the plane of the stopper, and the limiting rod may move between the bracket and the base to achieve the retraction of the ISOFIX assembly.

The present invention is further provided that the driving part comprises an inhaul cable connected to the sliding block connecting portion and a button assembly connected to the inhaul cable, the button assembly comprises a force application portion, a limiting portion and a button connecting portion which are integrally connected, the limiting portion is provided with a waist-shaped slot running through the limiting portion, and screws which are in threaded connection with the base and are movable relative to the limiting portion along the waist-shaped slot pass through the waist-shaped slot.

By employing the above technical solution, when a force is applied to the force application portion, the force application portion can drive the sliding block connecting portion to move by using the inhaul cable. The cooperation of the waist-shaped slot and the screws allows the button assembly to avoid separation from the base while keeping moving.

The present invention is further provided that the base is provided with a partition plate, the partition plate is provided with a button return spring, and an end, away from the partition plate, of the button return spring abuts against the limiting portion.

By employing the above technical solution, when the force application portion is stressed and moves, the limiting portion moves along with the force application portion, such that the button return spring is compressed due to pressing by the limiting portion. When the application of the force to the force application portion is stopped, the button return spring acts on the limiting portion, such that the button assembly returns.

The present invention is further provided that the inhaul cable comprises a sliding block section connected to the sliding block connecting portion, a button section connected to the button connecting portion and a transitional section connecting the sliding block section and the button section, the sliding block section and the button section each comprises a positioning rod and a connecting rod connected perpendicularly to the middle of the positioning rod and connected to the transitional section; and
the sliding block connecting portion and the button connecting portion each are provided with a positioning hole for the positioning rod to be engaged therein and an L-shaped groove for the connecting rod to be engaged therein, the two positioning holes respectively run through the sliding block connecting portion and the button connecting portion, the positioning hole is parallel to one side of a corresponding L-shaped groove, the L-shaped groove extends downward from upper end surfaces of the sliding block connecting portion and the button connecting portion all the way until the L-shaped groove communicates with the positioning hole, and the L-shaped groove has a width less than the diameter of the corresponding positioning hole.

By employing the above technical solution, when the sliding block connecting portion and the button connecting portion need to be connected to the sliding block section and the button section respectively, the positioning rod is first aligned to the positioning hole and the positioning rod slides into the positioning hole, while the connecting rod slides into the side, parallel to the positioning hole, of the L-shaped groove. When the positioning rod moves to the side where the connecting rod is aligned to the perpendicular positioning hole of the L-shaped groove, the connecting rod is driven to rotate around an axis of the positioning rod to the side where the connecting rod is engaged into the perpendicular positioning hole of the L-shaped groove.

The present invention is further provided that the bracket is provided with a transitional hole for the transitional section to pass therethrough and a connecting slot for the connecting rod to pass therethrough, both the connecting slot and the transitional hole run through an end face of the bracket, the connecting slot is located above the transitional hole and is in communication with the transitional hole, and the connecting slot has a width less than the diameter of the transitional hole.

By employing the above technical solution, the connecting rod passes through the connecting slot and then through the transitional hole, and the transitional section then passes through the transitional hole under the driving of the connecting rod, such that the transitional section can only move in the transitional hole.

The present invention is further provided that the base is fixedly provided with support plates, the bracket is fixedly connected to the support plates, and a cross rod is located between the base and the support plates.

The present invention is further provided that one of the support plates is provided with a communicating hole for the transitional section to pass therethrough, and the base is provided with a supporting seat for supporting the transitional section.

By employing the above technical solution, the arrangement of the communicating hole and the supporting seat functions to erect the inhaul cable.

The present invention is further provided that each of the support plates is provided with a sliding hole running through the support plate, and two ends of the limiting rod respectively pass through the sliding holes of the two support plates and then are fixedly connected to the cross rod.

In summary, the present invention has the following beneficial effects:
1. The retraction of the ISOFIX assembly is avoided by means of the cooperation of the bracket, the stopper, the stopper return spring and the limiting rod;
2. The restraints on the retraction of the ISOFIX assembly are released and the retraction of the ISOFIX assembly is realized by means of the cooperation of the button assembly, the inhaul cable, the sliding block, the stopper, the bracket and the stopper return spring.

### Brief Description of the Drawings

Fig. 1 is a schematic perspective structural view of an embodiment of the present invention before an ISOFIX assembly is removed;
Fig. 2 is a schematic perspective structural view of a base in an embodiment of the present invention;
Fig. 3 is a schematic perspective structural view of the ISOFIX assembly in an embodiment of the present invention;
Fig. 4 is a schematic perspective structural view showing a bracket, a stopper return spring, a stopper and a sliding block, which are separated, in an embodiment of the present invention;
Fig. 5 is an enlarged view of a portion A in Fig. 1;
Fig. 6 is a schematic planer structural view showing the bracket, the stopper return spring, the stopper and the sliding block, which are connected, in the embodiment of the present invention;
Fig. 7 is a perspective structural view showing an inhaul cable, a button assembly, a button return spring and screws, which are separated, in the embodiment of the present invention;
Fig. 8 is a schematic planer structural view of an embodiment of the present invention before the ISOFIX assembly is removed;
Fig. 9 is a schematic planer structural view of an embodiment of the present invention during removal of the ISOFIX assembly;
Fig. 10 is a schematic planer structural view of an embodiment of the present invention, with the ISOFIX assembly removed;
Fig. 11 is a schematic perspective structural view of the button assembly while being pressed in the embodiment of the present invention;
Fig. 12 is an enlarged view of a portion B in Fig. 11;
Fig. 13 is a schematic planer structural view of an embodiment of the present invention, with the button assembly pressed; and
Fig. 14 is a schematic plane structural view showing the ISOFIX assembly retracted in an embodiment of the present invention.

List of reference signs: 1. Base; 2. ISOFIX assembly; 3. Bottom plate; 4. Front plate; 5. Side plate; 6. Rear plate; 7. Support plate; 8. Connecting rod; 9. Handle; 10. Connector; 11. Cross rod; 12. Sliding rod; 13. Limiting rod; 14. Movable slot; 15. Sliding hole; 16. Bracket; 17. channel; 18. Stopper; 19. Movable lug plate; 20. Fixed lug plate; 21. Stopper return spring; 22. Stopper bevel; 23. Slot; 24. Slot bevel; 25. Sliding block; 26. Driving portion; 27. Sliding block connecting portion; 28. Sliding block bevel; 29. Inhaul cable; 30. Button assembly; 31. Force application portion; 32. Limiting portion; 33. Button connecting portion; 34. Waist-shaped slot; 35. Screw; 36. Positioning hole; 37. L-shaped groove; 38. Sliding block section; 39. Button section; 40. Transitional section; 41. Positioning rod; 42. Connecting rod; 43. Transitional hole; 44. Connecting slot; 45. Communicating hole; 46. Supporting seat; 47. Partition plate; 48. Button return spring; and 49. Limit opening.

### Detailed Description of Embodiments

The present invention will be further described below in detail with reference to the accompanying drawings.

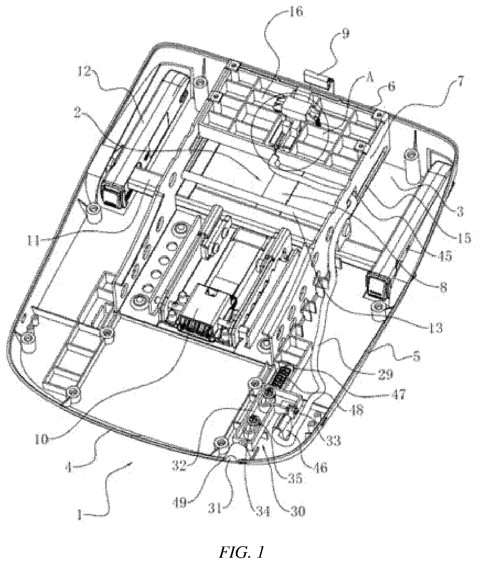

Referring to Fig. 1, an ISOFIX two-lock mechanism for retaining comprises a base 1 and an ISOFIX assembly 2.

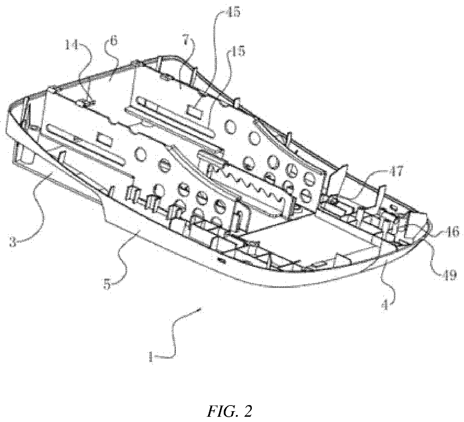

Referring to Fig. 2, the base 1 comprises a bottom plate 3, a front plate 4, two side plates 5 and a rear plate 6. The front plate 4, the two side plates 5 and the rear plate 6 are integrally connected around the bottom plate 3. The portions, close to the rear plate 6, of the bottom plate 3 and the side plates 5 are notched, such that the portions, close to the rear plate 6, of the bottom plate 3 and the side plates 5 are separated from each other. The bottom plate 3 is provided with two support plates 7 perpendicular to the bottom plate 3 and parallel to each other. The two support plates 7 are respectively connected to the connections between the two side plates 5 and the rear plate 6. The portions, away from the rear plate 6, of the two support plates 7 are connected to the bottom plate 3, and the portions close to the rear plate 6 are separated from the bottom plate 3.

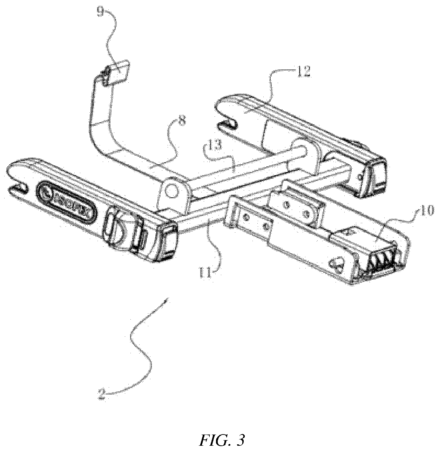

Referring to Fig. 3, the ISOFIX assembly 2 comprises a connecting rod 8, handles 9 respectively connected to two ends of the connecting rod 8, a connector 10 connected to a child safety seat, a cross rod 11 connected perpendicularly to the middle of the connecting rod 8, sliding rods 12 connected perpendicularly to two ends of the cross rod 11 and connected to a car interface, and a limiting rod 13 fixedly erected above the cross rod 11.

Referring to Figs. 1, 2 and 3, when an ISOFIX and the base 1 are assembled, the connecting rod 8 is located between the two support plates 7 and abuts against the bottom plate 3. The connecting rod 8 is movable in a direction parallel to the two support plates 7. The rear plate 6 is provided with a movable slot 14, and one end of the connecting rod 8 passes through the movable slot 14 and then extends further to be connected to the handle 9. The cross rod 11 is located between the support plates 7 and the bottom plate 3 and is movable in a region that separates the support plates 7 from the bottom plate 3. The support plates 7 are provided with sliding holes 15 running through the support plates 7, and two ends of the limiting rod 13 respectively pass through the sliding holes 15 of the two support plates 7 and then are fixedly connected to the cross rod 11, such that the limiting rod 13 may move along the sliding holes 15.

Referring to Fig. 1, upper ends of the support plates 7 are fixedly connected to a bracket 16, such that the bracket 16 is also located above the ISOFIX assembly 2. The bracket 16 is generally in the form of a cuboid, three side walls of which are respectively attached to the two support plates 7 and the rear plate 6, and a further side wall is suspended.

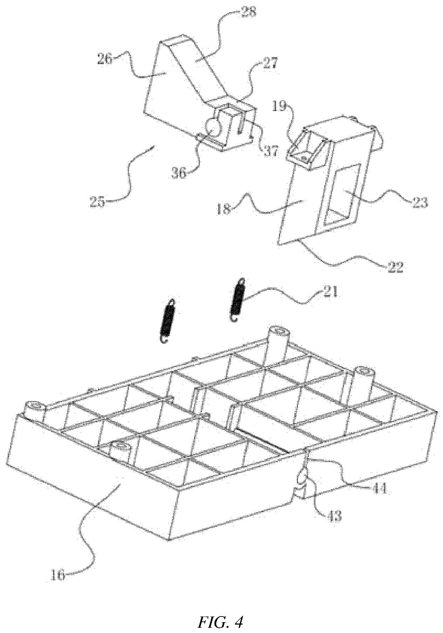

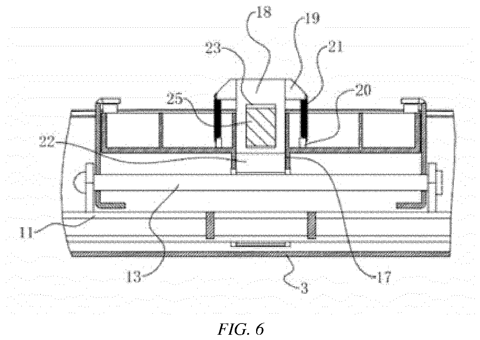

Referring to Figs. 4, 5 and 6, the bracket 16 is provided with a rectangular channel 17 running through the bracket 16, a stopper 18 movable up and down along the channel 17 is arranged in the channel 17, and the periphery of the stopper 18 is fitted to the channel 17. The upper end of the stopper 18 is located above the bracket 16, and the lower end of the stopper 18 is located below the bracket 16. Movable lug plates 19 are arranged on two opposite sides of the upper end of the stopper 18, and a fixed lug plate 20 is arranged on the side, close to the upper end of the stopper 18, of the bracket 16. A stopper return spring 21 is connected between the movable lug plate 19 and the fixed lug plate 20. Before the ISOFIX assembly 2 is removed, the stopper return spring 21 is in a compressed state under the action of the gravity of the stopper 18. When the stopper 18 moves upward relative to the bracket 16, the stopper return spring 21 first restores from the deformation in the compressed state and then is brought into an extended state. Therefore, the stopper 18 tends to move downward under the actions of its own gravity and the stopper return spring 21. The lower end of the stopper 18 is provided with a stopper bevel 22. Before the ISOFIX assembly 2 is removed, the lower end of the stopper 18 is flush with the limiting rod 13. When the ISOFIX assembly 2 is moved away from the base 1 by acting on the handle 9, the limiting rod 13 will move toward the stopper 18 along the sliding holes 15 until the limiting rod 13 abuts against the stopper bevel 22 of the stopper 18. As the limiting rod 13 moves further, the stopper 18 is driven to move upward, such that the stopper return spring 21 is brought into the extended state. As the limiting rod 13 moves further and away from the abutment against the stopper 18, the stopper 18 moves downward under the action of its own gravity and the stopper return spring 21. At this point, the stopper 18 moves downward under the action of the stopper return spring 21 until the plane of the stopper 18 abuts against the limiting rod 13, such that the stopper 18 prevents the limiting rod 13 from retracting, which in turn preventing the ISOFIX assembly 2 from retracting.

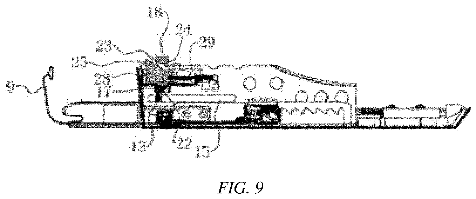

Referring to Figs. 4 and 9, the stopper 18 is provided with a slot 23 running through the stopper 18 in a movement direction of the limiting rod 13, and an upper surface of the slot 23 is provided as a slot bevel 24. The slot 23 is provided with a sliding block 25 therein, and the sliding block 25 comprises a driving portion 26 and a sliding block connecting portion 27 which are integrally connected. The upper end of the driving portion 26 is provided with a sliding block bevel 28, and the sliding block bevel 28 is attached to the slot bevel 24.

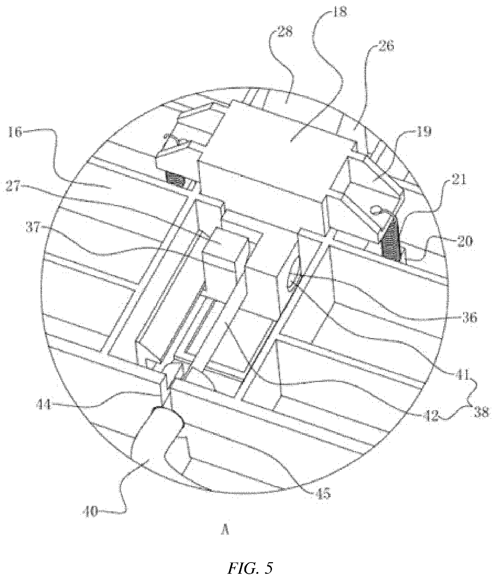

Referring to Figs. 1 and 5, the sliding block connecting portion 27 is connected to an inhaul cable 29, and the end, away from the sliding block connecting portion 27, of the inhaul cable 29 is connected to a button assembly 30. The button assembly 30 drives the slide block connecting portion 27 to move along the movement direction of the limiting rod 13 by means of the inhaul cable 29, such that the sliding block bevel 28 move relative to the slot bevel 24, allowing the stopper 18 to move upward under the driving of the sliding block 25. When the action on the button assembly 30 is stopped, the stopper 18 moves downward under the action of the stopper return spring 21, and the sliding block bevel 28 move relative to the slot bevel 24 again, such that the sliding block 25 moves reversely in the movement direction of the limiting rod 13.

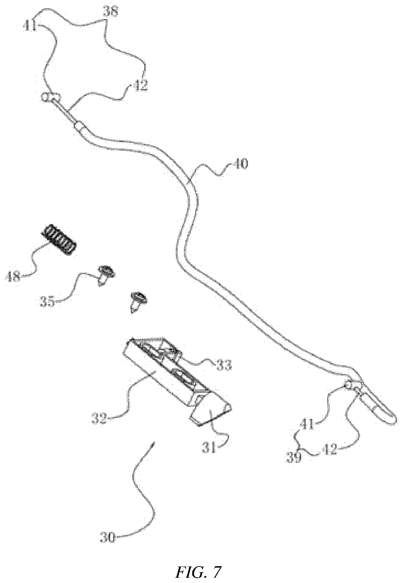

Referring to Figs. 1 and 7, the button assembly 30 comprises a force application portion 31, a limiting portion 32 and a button connecting portion 33 which are integrally connected. The limiting portion 32 is provided with a waist-shaped slot 34 running through the limiting portion 32, and screws 35 which are in threaded connection with the base 1 and are movable relative to the limiting portion 32 along the waist-shaped slot 34 pass through the waist-shaped slot 34. The sliding block connecting portion 27 and the button connecting portion 33 have the same shape. The sliding block connecting portion 27 and the button connecting portion 33 each are provided with a positioning hole 36 and an L-shaped groove 37. The two positioning holes 36 run through the sliding block connecting portion 27 and the button connecting portion 33, respectively. The positioning hole 36 is parallel to one side of a corresponding L-shaped groove 37, and the L-shaped groove 37 extends downward from upper end surfaces of the sliding block connecting portion 27 and the button connecting portion 33 all the way until it communicates with the positioning hole 36. The L-shaped groove 37 has a width less than the diameter of the corresponding positioning hole 36.

Referring to Figs. 1, 5 and 7, the inhaul cable 29 comprises a sliding block section 38 connected to the sliding block connecting portion 27, a button section 39 connected to the button connecting portion 33, and a transitional section 40 connecting the sliding block section 38 and the button section 39. The sliding block section 38 and the button section 39 each comprise a positioning rod 41 and a connecting rod 42 connected perpendicularly to the middle of the positioning rod 41 and connected to the transitional section 40. The positioning rod 41 is just engaged into the positioning hole 36, while the connecting rod 42 is engaged into the L-shaped groove 37. When the sliding block connecting portion 27 and the button connecting portion 33 need to be connected to the sliding block section 38 and the button section 39, respectively, the positioning rod 41 is first aligned to the positioning hole 36, and the positioning rod 41 is forced to slide into the positioning hole 36 while the connecting rod 42 slides into the side, parallel to the positioning hole 36, of the L-shaped groove 37. When the positioning rod 41 moves to the side where the connecting rod 42 is aligned to the perpendicular positioning hole 36 of the L-shaped groove 37, the connecting rod 42 is driven to rotate around an axis of the positioning rod 41 to the side where the connecting rod 42 is engaged into the perpendicular positioning hole 36 of the L-shaped groove 37.

Referring to Figs. 4 and 5, in order to better realize the connection of the sliding block section 38 and the sliding block connecting portion 27, the bracket 16 is provided with a transitional hole 43 for the transitional section 40 to pass therethrough and a connecting slot 44 for the connecting rod 42 to pass therethrough. Both the transitional hole 43 and the connecting slot 44 run through the suspended side wall of the bracket 16. The connecting slot 44 is located above the transitional hole 43 and is in communication with the transitional hole 43. The connection groove 44 has a width less than the diameter of the transitional hole 43. The connecting rod 42 passes through the connecting slot 44 and then passes through the transitional hole 43, and then the transitional section 40 passes through the transitional hole 43 under the driving of the connecting rod 42, such that the transitional section 40 can only move in the transitional hole 43.

Referring to Fig. 1, in order to better connect the button assembly 30 and the sliding block connecting portion 27 using the inhaul cable 29, one of the support plates 7 is provided with a communicating hole 45 for the transitional section 40 to pass therethrough, and the transitional section 40 is movable in the communicating hole 45. A supporting seat 46 for supporting the transitional section 40 is also arranged on the bottom plate 3. The arrangement of the communicating hole 45 and the supporting seat 46 functions to erect the inhaul cable 29.

Referring to Figs. 1 and 2, the bottom plate 3 is provided with a partition plate 47, the partition plate 47 is fixedly provided with a button return spring 48, and the end, away from the partition plate 47, of the button return spring 48 abuts against the limiting portion 32. When the force application portion 31 is pressed to drive the force application portion 31 to move in the moving direction of the limiting rod 13, the button return spring 48 is in the compressed state. The movement of the force application portion 31 drives the sliding block 25 to move through the limiting portion 32, the button connecting portion 33, the inhaul cable 29 and the sliding block connecting portion 27. When pressing the force application portion 31 is stopped, on the one hand, the stopper 18 moves downward under the action of the stopper return spring 21, such that the sliding block 25 moves reversely to drive the force application portion 31 to move reversely, and on the other hand, the button return spring 48 also drives the force application portion 31 to move reversely.

Referring to Fig. 1, the front plate 4 is also provided with a limit opening 49, such that the force application portion 31 may protrude from the front plate 4 through the limit opening 49, thereby facilitating a person pressing the force application portion 31 for operation. The force application portion 31 tapers from the end close to the limiting portion 32 to the end away from the limiting portion 32, and the size of the limit opening 49 only allows the force application portion 31 to partially pass through.

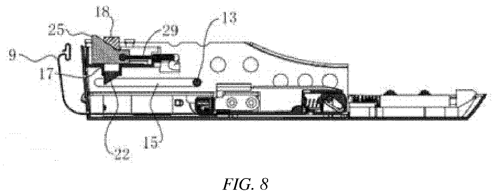

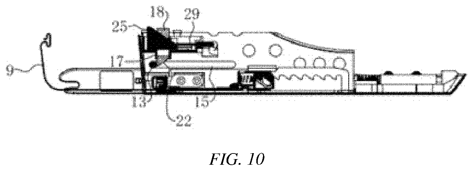

Working process: the ISOFIX assembly 2 needs to be pulled out when the child safety seat is installed. Referring to Fig. 8, at this point, the ISOFIX assembly 2 is driven to move between the bottom plate 3 and the bracket 16 in the direction away from the base 1 by acting on the handles 9, such that the limiting rod 13 also moves, between the bottom plate 3 and the bracket 16 toward the stopper 18 along the sliding holes 15. During the movement of the limiting rod 13, the limiting rod 13 will move into abutment against the stopper bevel 22. Referring to Fig. 9, at this point, the limiting rod 13 further moves, the stopper 18 moves upward along the channel 17 under the action of the limiting rod 13, and the stopper return spring 21 is brought into the extended state. Referring to Fig. 10, when the limiting rod 13 moves to be separated from the stopper bevel 22, the stopper 18 will move downward along the channel 17 under the actions of its own gravity and the stopper return spring 21, such that the limiting rod 13 abuts against the plane of the stopper 18 and is restrained from being retracted by the stopper 18.

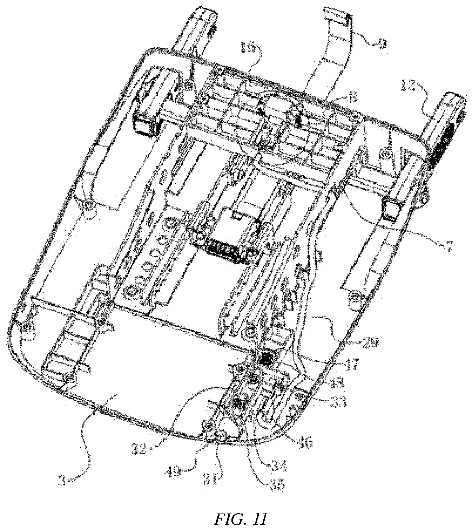

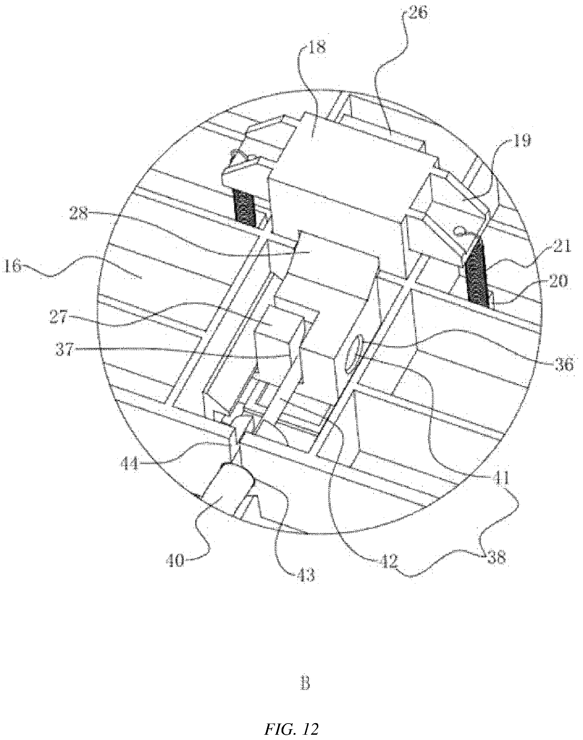

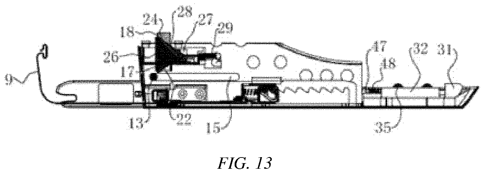

The ISOFIX assembly 2 needs to be retracted when a distance between a child safety seat back and an car seat needs to be adjusted or the child safety seat needs to be removed from an car after the child safety seat is installed to the car. Referring to Figs. 11, 12 and 13, the force application portion 31 is pressed to move the force application portion 31, such that the limiting portion 32 is driven to move, and the button return spring 48 is compressed. The limiting portion 32 drives the button connecting portion 33 to move, and the button connecting portion 33 drives the sliding block connecting portion 27 to move by means of the inhaul cable 29 so as to drive the driving portion 26 to slide into the slot 23, such that the sliding block bevel 28 move relative to the slot bevel 24, allowing the stopper 18 to move upward under the driving of the sliding block 25, and the stopper return spring 21 is brought into the extended state. At this point, the limiting rod 13 no longer abuts against the plane of the stopper 18, such that the limiting rod 13 is no longer limited by the stopper 18, and the ISOFIX assembly 2 may be retracted.

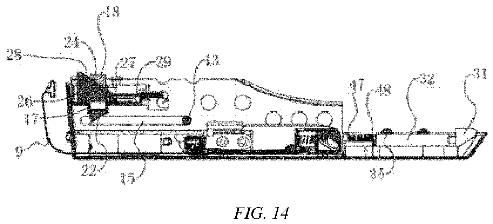

Referring to Fig. 14, when the ISOFIX assembly 2 is retracted, pressing the force application portion 31 is stopped, and the limiting portion 32 moves reversely, under the action of the button return spring 48, to drive the force application portion 31 to move reversely. Meanwhile, the stopper return spring 21 returns, the stopper 18 moves downward, the sliding block bevel 28 move relative to the slot bevel 24 again, such that the sliding block 25 moves reversely along the movement direction of the limiting rod 13, the button connecting portion 33 is driven to move reversely by using the inhaul cable 29, and thus the limiting portion 32 and the force application portion 31 are driven to move reversely.

## Claims

1. An ISOFIX two-lock mechanism for retaining, comprising a base (1) and an ISOFIX assembly (2), **characterized in that** a bracket (16) is provided at the upper end of the base (1), the bracket (16) is provided with a channel (17) running through the bracket (16), the channel (17) is provided with a stopper (18) movable up and down along the channel (17) therein, a stopper bevel (22) is provided at the lower end of the stopper (18), and a stopper return spring (21) is connected between the stopper (18) and the bracket (16);
the ISOFIX assembly (2) is slidably fixed to the base (1);
the ISOFIX assembly (2) comprises a limiting rod (13) located between the base and the bracket; and
when the limiting rod (13) moves into abutment against the stopper bevel (22), the stopper (18) moves upward along the channel (17), and the stopper return spring (21) elastically deforms; and when the limiting rod (13) moves further and away from the abutment against the stopper (18), the stopper (18) moves downward under the action of the stopper return spring (21) until a plane of the stopper (18) abuts against the limiting rod (13).

2. The ISOFIX two-lock mechanism for retaining according to claim 1, **characterized in that** the stopper (18) is provided with a slot (23), a sliding block (25) is arranged in the slot (23), the sliding block (25) comprises a driving portion (26) and a sliding block connecting portion (27) which are integrally connected, an upper end of the driving portion (26) is provided with a sliding block bevel (28), and the sliding block connecting portion (27) is connected to a driving part configured to drive the sliding block (25) to move in the slot (23).

3. The ISOFIX two-lock mechanism for retaining according to claim 2, **characterized in that** the driving part comprises an inhaul cable (29) connected to the sliding block connecting portion (27) and a button assembly (30) connected to the inhaul cable (29), the button assembly (30) comprises a force application portion (31), a limiting portion (32) and a button connecting portion (33) which are integrally connected, the limiting portion (32) is provided with a waist-shaped slot (34) running through the limiting portion (32), and screws (35) which are in threaded connection with the base (1) and are movable relative to the limiting portion (32) along the waist-shaped slot (34) pass through the waist-shaped slot (34).

4. The ISOFIX two-lock mechanism for retaining according to claim 3, **characterized in that** the base (1) is provided with a partition plate (47), the partition plate (47) is provided with a button return spring (48), and an end, away from the partition plate (47), of the button return spring (48) abuts against the limiting portion (32).

5. The ISOFIX two-lock mechanism for retaining according to claim 3, **characterized in that** the inhaul cable (29) comprises a sliding block section (38) connected to the sliding block connecting portion (27), a button section (39) connected to the button connecting portion (33) and a transitional section (40) connecting the sliding block section (38) and the button section (39), the sliding block section (38) and the button section (39) each comprises a positioning rod (41) and a connecting rod (42) connected perpendicularly to the middle portion of the positioning rod (41) and connected to the transitional section (40); and
the sliding block connecting portion (27) and the button connecting portion (33) each are provided with a positioning hole (36) for the positioning rod (41) to be engaged therein and an L-shaped groove (37) for the connecting rod (42) to be engaged therein, the two positioning holes (36) respectively run through the sliding block connecting portion (27) and the button connecting portion (33), the positioning hole (36) is parallel to one side of a corresponding L-shaped groove (37), the L-shaped groove (37) extends downward from upper end surfaces of the sliding block connecting portion (27) and the button connecting portion (33) all the way until the L-shaped groove communicates with the positioning hole (36), and the L-shaped groove (37) has a width less than the diameter of the corresponding positioning hole (36).

6. The ISOFIX two-lock mechanism for retaining according to claim 5, **characterized in that** the bracket (16) is provided with a transitional hole (43) for the transitional section (40) to pass therethrough and a connecting slot (44) for the connecting rod (42) to pass therethrough, both the connecting slot (44) and the transitional hole (43) run through an end face of the bracket (16), the connecting slot (44) is located above the transitional hole (43) and is in communication with the transitional hole (43), and the connecting slot (44) has a width less than the diameter of the transitional hole (43).

7. The ISOFIX two-lock mechanism for retaining according to claim 5, **characterized in that** the base (1) is fixedly provided with support plates (7), the bracket (16) is fixedly connected to the support plates (7), and a cross rod (11) is located between the base (1) and the support plates (7).

8. The ISOFIX two-lock mechanism for retaining according to claim 7, **characterized in that** one of the support plates (7) is provided with a communicating hole (45) for the transitional section (40) to pass therethrough, and the base (1) is provided with a supporting seat (46) for supporting the transitional section (40).

9. The ISOFIX two-lock mechanism for retaining according to claim 7, wherein each of the support plates (7) is provided with a sliding hole (15) running through the support plate (7), and two ends of the limiting rod (13) respectively pass through the sliding holes (15) of the two support plates (7) and then are fixedly connected to the cross rod (11).

## Patentansprüche

1. ISOFIX-Doppelverriegelungsmechanismus zur Rückhaltung, umfassend eine Basis (1) und eine ISOFIX-Baugruppe (2), **dadurch gekennzeichnet, dass** eine Halterung (16) am oberen Ende der Basis (1) bereitgestellt ist, wobei die Halterung (16) mit einem Kanal (17) versehen ist, der durch die Halterung (16) läuft, der Kanal (17) mit einem Stopper (18) versehen ist, der entlang des Kanals (17) darin auf und ab bewegbar ist, eine Stopperabschrägung (22) am unteren Ende des Stoppers (18) bereitgestellt ist und eine Stopperrückstellfeder (21) zwischen dem Stopper (18) und der Halterung (16) verbunden ist;
die ISOFIX-Baugruppe (2) verschiebbar an der Basis (1) befestigt ist;
die ISOFIX-Baugruppe (2) einen Begrenzungsstab (13) umfasst, der sich zwischen der Basis und der Halterung befindet; und
wenn sich der Begrenzungsstab (13) in Anlage gegen die Stopperabschrägung (22) bewegt, sich der Stopper (18) nach oben entlang des Kanals (17) bewegt und sich die Stopperrückstellfeder (21) elastisch verformt; und wenn sich der Begrenzungsstab (13) weiter und weg von der Anlage gegen den Stopper (18) bewegt, sich der Stopper (18) unter Wirkung der Stopperrückstellfeder (21) nach unten bewegt, bis eine Ebene des Stoppers (18) gegen den Begrenzungsstab (13) anliegt.

2. ISOFIX-Doppelverriegelungsmechanismus zur Rückhaltung nach Anspruch 1, **dadurch gekennzeichnet, dass** der Stopper (18) mit einem Schlitz (23) versehen ist, ein Gleitblock (25) im Schlitz (23) angeordnet ist, der Gleitblock (25) einen Antriebsteil (26) und einen Gleitblockverbindungsteil (27) umfasst, die integral verbunden sind, ein oberes Ende des Antriebsteils (26) mit einer Gleitblockabschrägung (28) versehen ist und der Gleitblockverbindungsteil (27) mit einem Antriebsbauteil verbunden ist, das konfiguriert ist, den Gleitblock (25) anzutreiben, um sich im Schlitz (23) zu bewegen.

3. ISOFIX-Doppelverriegelungsmechanismus zur Rückhaltung nach Anspruch 2, **dadurch gekennzeichnet, dass** das Antriebsbauteil ein Einzugskabel (29), das mit dem Gleitblockverbindungsteil (27) verbunden ist, und eine Tastenbaugruppe (30), die mit dem Einzugskabel (29) verbunden ist, umfasst, wobei die Tastenbaugruppe (30) einen Kraftanwendungsteil (31), einen Begrenzungsteil (32) und einen Tastenverbindungsteil (33) umfasst, die integral verbunden sind, wobei der Begrenzungsteil(32) mit einem hüftförmigen Schlitz (34) versehen ist, der durch den Begrenzungsteil (32) läuft, und Schrauben (35), die mit der Basis (1) in Gewindeverbindung stehen und bezüglich des Begrenzungsteils (32) entlang des hüftförmigen Schlitzes (34) bewegbar sind, durch den hüftförmigen Schlitz (34) laufen.

4. ISOFIX-Doppelverriegelungsmechanismus zur Rückhaltung nach Anspruch 3, **dadurch gekennzeichnet, dass** die Basis (1) mit einer Trennplatte (47) versehen ist, wobei die Trennplatte (47) mit einer Tastenrückstellfeder (48) versehen ist und ein Ende, entfernt von der Trennplatte (47), der Tastenrückstellfeder (48) gegen den Begrenzungsteil (32) anliegt.

5. ISOFIX-Doppelverriegelungsmechanismus zur Rückhaltung nach Anspruch 3, **dadurch gekennzeichnet, dass** das Einzugskabel (29) einen Gleitblockabschnitt (38), der mit dem Gleitblockverbindungsteil (27) verbunden ist, einen Tastenabschnitt (39), der mit dem Tastenverbindungsteil (33) verbunden ist, und einen Übergangsabschnitt (40), der den Gleitblockabschnitt (38) und den Tastenabschnitt (39) verbindet, umfasst, wobei der Gleitblockabschnitt (38) und der Tastenabschnitt (39) jeweils einen Positionierungsstab (41) und einen Verbindungsstab (42), der senkrecht mit dem mittleren Teil des Positionierungsstabs (41) verbunden ist und mit dem Übergangsabschnitt (40) verbunden ist, umfassen; und
der Gleitblockverbindungsteil (27) und der Tastenverbindungsteil (33) jeweils mit einem Positionierungsloch (36), in das der Positionierungsstab (41) eingreifen soll, und einer L-förmigen Nut (37), in die der Verbindungsstab (42) eingreifen soll, versehen sind, wobei die beiden Positionierungslöcher (36) jeweils durch den Gleitblockverbindungsteil (27) und den Tastenverbindungsteil (33) laufen, das Positionierungsloch (36) parallel zu einer Seite einer entsprechenden L-förmigen Nut (37) ist, sich die L-förmige Nut (37) von oberen Endoberflächen des Gleitblockverbindungsteils (27) und des Tastenverbindungsteils (33) bis zu der Stelle nach unten erstreckt, an der die L-förmige Nut mit dem Positionierungsloch (36) kommuniziert, und die L-förmige Nut (37) eine Breite aufweist, die geringer ist als der Durchmesser des entsprechenden Positionierungslochs (36).

6. ISOFIX-Doppelverriegelungsmechanismus zur Rückhaltung nach Anspruch 5, **dadurch gekennzeichnet, dass** die Halterung (16) mit einem Übergangsloch (43), durch das der Übergangsabschnitt (40) laufen soll, und einem Verbindungsschlitz (44), durch den der Verbindungsstab (42) laufen soll, versehen ist, wobei sowohl der Verbindungsschlitz (44) als auch das Übergangsloch (43) durch eine Endfläche der Halterung (16) laufen, sich der Verbindungsschlitz (44) über dem Übergangsloch (43) befindet und mit dem Übergangsloch (43) in Kommunikation steht, und der Verbindungsschlitz (44) eine Breite aufweist, die geringer ist als der Durchmesser des Übergangslochs (43).

7. ISOFIX-Doppelverriegelungsmechanismus zur Rückhaltung nach Anspruch 5, **dadurch gekennzeichnet, dass** die Basis (1) fest mit Stützplatten (7) versehen ist, die Halterung (16) fest mit den Stützplatten (7) verbunden ist und sich ein Querstab (11) zwischen der Basis (1) und den Stützplatten (7) befindet.

8. ISOFIX-Doppelverriegelungsmechanismus zur Rückhaltung nach Anspruch 7, **dadurch gekennzeichnet, dass** eine der Stützplatten (7) mit einem Kommunikationsloch (45), durch das der Übergangsabschnitt (40) laufen soll, versehen ist und die Basis (1) mit einem Stützsitz (46) zum Stützen des Übergangsabschnitts (40) versehen ist.

9. ISOFIX-Doppelverriegelungsmechanismus zur Rückhaltung nach Anspruch 7, wobei jede der Stützplatten (7) mit einem Gleitloch (15) versehen ist, das durch die Stützplatte (7) läuft, und zwei Enden des Begrenzungsstabs (13) jeweils durch die Gleitlöcher (15) der beiden Stützplatten (7) laufen und dann fest mit dem Querstab (11) verbunden sind.

## Revendications

1. Mécanisme à deux verrous ISOFIX pour retenue, comprenant une base (1) et un ensemble ISOFIX (2), **caractérisé en ce qu'**un support (16) est disposé au niveau de l'extrémité supérieure de la base (1), le support (16) est doté d'un canal (17) s'étalant à travers le support (16), le canal (17) est doté d'une butée (18) mobile vers le haut et vers le bas le long du canal (17) dans celui-ci, une rampe de butée (22) est disposée au niveau de l'extrémité inférieure de la butée (18) et un ressort de rappel de butée (21) est relié entre la butée (18) et le support (16) ;
l'ensemble ISOFIX (2) est fixé de manière coulissante à la base (1) ;
l'ensemble ISOFIX (2) comprend une tige de limitation (13) située entre la base et le support ; et
lorsque la tige de limitation (3) se déplace en butée contre la rampe de butée (22), la butée (18) se déplace vers le haut le long du canal (17), et le ressort de rappel de butée (21) se déforme élastiquement ; et lorsque la tige de limitation (13) se déplace davantage et loin de la butée contre la butée (18), la butée (18) se déplace vers le bas sous l'action du ressort de rappel de butée (21) jusqu'à ce qu'un plan de la butée (18) vienne buter contre la tige de limitation (13).

2. Mécanisme à deux verrous ISOFIX pour retenue selon la revendication 1, **caractérisé en ce que** la butée (18) est dotée d'une fente (23), un bloc coulissant (25) est agencé dans la fente (23), le bloc coulissant (25) comprend une partie d'entraînement (26) et une partie de liaison de bloc coulissant (27) qui sont reliées d'un seul tenant, une extrémité supérieure de la partie d'entraînement (26) est dotée d'une rampe de bloc coulissant (28), et la partie de liaison de bloc coulissant (27) est reliée à une partie d'entraînement configurée pour entraîner le déplacement du bloc coulissant (25) dans la fente (23).

3. Mécanisme à deux verrous ISOFIX pour retenue selon la revendication 2, **caractérisé en ce que** la partie d'entraînement comprend un câble avant (29) relié à la partie de liaison de bloc coulissant (27) et un ensemble bouton (30) relié au câble avant (29), l'ensemble bouton (30) comprend une partie d'application de force (31), une partie de limitation (32) et une partie de liaison de bouton (33) qui sont reliées d'un seul tenant, la partie de limitation (32) est dotée d'une fente en forme de ceinture (34) s'étalant à travers la partie de limitation (32), et des vis (35) qui sont en liaison filetée avec la base (1) et sont mobiles par rapport à la partie de limitation (32) le long de la partie en forme de ceinture (34) traversent la fente en forme de ceinture (34).

4. Mécanisme à deux verrous ISOFIX pour retenue selon la revendication 3, **caractérisé en ce que** la base (1) est dotée d'une plaque de séparation (47), la plaque de séparation (47) est dotée d'un ressort de rappel de bouton (48) et une extrémité, éloignée de la plaque de séparation (47), du ressort de rappel de bouton (48) vient buter contre la partie de limitation (32).

5. Mécanisme à deux verrous ISOFIX pour retenue selon la revendication 3, **caractérisé en ce que** le câble avant (29) comprend une section de bloc coulissant (38) reliée à la partie de liaison de bloc coulissant (27), une section de bouton (39) reliée à la partie de liaison de bouton (33) et une section de transition (40) reliant la section de bloc coulissant (38) et la section de bouton (39), la section de bloc coulissant (38) et la section de bouton (39) comprennent chacune une tige de positionnement (41) et une tige de liaison (42) reliée perpendiculairement à la partie centrale de la tige de positionnement (41) et reliée à la section de transition (40) ; et
la partie de liaison de bloc coulissant (27) et la partie de liaison de bouton (33) sont chacune dotées d'un trou de positionnement (36) pour que la tige de positionnement (41) y entre en prise et d'une rainure en forme de L (37) pour que la tige de liaison (42) y entre en prise, les deux trous de positionnement (36) s'étalent respectivement à travers la partie de liaison de bloc coulissant (27) et la partie de liaison de bouton (33), le trou de positionnement (36) est parallèle à un côté d'une rainure en forme de L (37) correspondante, la rainure en forme de L (37) s'étend vers le bas depuis des surfaces d'extrémité supérieures de la partie de liaison de bloc coulissant (27) et de la partie de liaison de bouton (33) entièrement jusqu'à ce que la rainure en forme de L communique avec le trou de positionnement (36), et la rainure en forme de L (37) présente une largeur inférieure au diamètre du trou de positionnement (36) correspondant.

6. Mécanisme à deux verrous ISOFIX pour retenue selon la revendication 5, **caractérisé en ce que** le support (16) est doté d'un trou de transition (43) pour que la section de transition (40) passe à travers celui-ci et d'une fente de liaison (44) pour que la tige de liaison (42) passe à travers celle-ci, la fente de liaison (44) et le trou de transition (43) s'étalent à travers une face d'extrémité du support (16), la fente de liaison (44) est située au-dessus du trou de transition (43) et est en communication avec le trou de transition (43), et la fente de liaison (44) présente une largeur inférieure au diamètre du trou de transition (43).

7. Mécanisme à deux verrous ISOFIX pour retenue selon la revendication 5, **caractérisé en ce que** la base (1) est dotée à demeure de plaques de soutien (7), le support (16) est relié à demeure aux plaques de soutien (7) et une tige transversale (11) est située entre la base (1) et les plaques de soutien (7).

8. Mécanisme à deux verrous ISOFIX pour retenue selon la revendication 7, **caractérisé en ce qu'**une des plaques de soutien (7) est dotée d'un trou de communication (45) pour que la section de transition (40) passe à travers celui-ci, et la base (1) est dotée d'un siège de soutien (46) pour soutenir la section de transition (40).

9. Mécanisme à deux verrous ISOFIX pour retenue selon la revendication 7, dans lequel chacune des plaques de soutien (7) est dotée d'un trou de coulissement (15) s'étalant à travers la plaque de soutien (7), et deux extrémités de la tige de limitation (13) passent respectivement à travers les trous de coulissement (15) des deux plaques de soutien (7) puis sont reliées à demeure à la tige transversale (11).
